(19) **Europäisches Patentamt**

**European Patent Office**

**Office européen des brevets**

(11) **EP 1 612 551 B1**

(12) **EUROPÄISCHE PATENTSCHRIFT**

(45) Veröffentlichungstag und Bekanntmachung des Hinweises auf die Patenterteilung:
**06.12.2006 Patentblatt 2006/49**

(51) Int Cl.:
***G01N 27/90*** *(2006.01)*    ***B61K 9/10*** *(2006.01)*

(21) Anmeldenummer: **05013777.7**

(22) Anmeldetag: **27.06.2005**

(54) **Verfahren zur Ermittlung der Rauheit von frisch geschliffenen Schienen und/oder Schienenbereichen**

Method of evaluating the roughness of freshly polished rails and/or rail segments

Procédé d'évaluation de la rugosité de rails et/out de segments de rail

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **28.06.2004 DE 102004031217**

(43) Veröffentlichungstag der Anmeldung:
**04.01.2006 Patentblatt 2006/01**

(73) Patentinhaber: **DB Netz AG**
**60468 Frankfurt am Main (DE)**

(72) Erfinder:
• **Krull, Ronald**
**39576 Stendal (DE)**
• **Hug, Hartmut**
**63579 Freigericht (DE)**
• **Hintze, Hartmut**
**14715 Milow (DE)**

(74) Vertreter: **Zinken-Sommer, Rainer et al**
**Deutsche Bahn AG**
**Patentabteilung**
**Völckerstrasse 5**
**80939 München (DE)**

(56) Entgegenhaltungen:
**EP-A- 0 159 933**      **DE-A1- 10 025 066**
**US-A- 5 537 334**

• **PATENT ABSTRACTS OF JAPAN Bd. 008, Nr. 286 (P-324), 27. Dezember 1984 (1984-12-27) -& JP 59 148858 A (KOBE SEIKOSHO KK), 25. August 1984 (1984-08-25)**
• **PATENT ABSTRACTS OF JAPAN Bd. 010, Nr. 316 (P-510), 28. Oktober 1986 (1986-10-28) -& JP 61 126461 A (DAIDO STEEL CO LTD), 13. Juni 1986 (1986-06-13)**
• **J.HANSEN: "The Eddy Current Inspetion Method-Part 4" INSIGHTS, Bd. 46, Nr. 8, 8. August 2004 (2004-08-08), Seiten 1-4, XP002346910**
• **M.P.BLODGETT,C.V.UKPABI,P.B.NAGY: "Surface Roughness Influence on Eddy Current Electrical Conductivity" MATERIALS EVALUATION, Juni 2003 (2003-06), XP002346911**
• **GAUTIER P-E ET AL: "Research at SNCF to diminish train noise" REVUE GENERALE DES CHEMINS DE FER, CENTRALE DES REVUES DUNOD-GAUTHIER-VILLARS. PARIS, FR, Bd. 1999, Nr. 6, Juni 1999 (1999-06), Seiten 9-19,45, XP004371450 ISSN: 0035-3183**
• **YUSA N ET AL: "Application of eddy current inversion technique to the sizing of defects in Inconel welds with rough surfaces" NUCLEAR ENGINEERING AND DESIGN, AMSTERDAM, NL, Bd. 235, Nr. 14, Juni 2005 (2005-06), Seiten 1469-1480, XP004941734 ISSN: 0029-5493**

**Beschreibung**

Die Erfindung betrifft ein Verfahren zur Ermittlung der Rauheit von frisch geschliffenen Schienen und /oder Schienenbereichen, wobei in einer fahrbaren Vorrichtung befindliche Wlrbelstrom-Prüfsonden über Bereiche von Schienensegmenten geführt und die Messsignale ortabhängig ausgewertet werden, wodurch erste entstehende Oberflächenschäden auf Schienen bereits rechtzeitig erkannt werden sollen.

Bekannt sind Verfahren zur Messung von Unebenheiten in der Fahroberfläche von in einem Gleisbett verlegten Schienen für schienengebundene Verkehrsmittel, Eisenbahn, Straßenbahn, U-Bahn, S-Bahn o. dgl.

In Folge des Schienenfahrbetriebes entstehen auf den die Fahrflächen bildenden Schienenoberseiten lokale periodische Fahrflächenunebenheiten, die beim Abrollen der Räder des Schienenfahrzeuges Schwingungen und Körperschall verursachen, die zu einer Lärmbelästigung der Umwelt und zu einer Lärm- und Schwingungsbelästigung der Fahrgäste führen. Eine Erkennung derartiger Fahrflächenunebenheiten zu einem möglichst frühen Zeitpunkt verhindert einen weiteren Verschleißprozess mit all seinen damit zusammenhängenden Folgeerscheinungen, wie beispielsweise stark verkürzten Schienenstandzeiten, Verschleißprozesse an den Fahrwerken der Schienenfahrzeuge etc.

Fahrflächenunebenheiten werden in lange Wellen, Riffel und letztendlich in Rauhigkeiten eingeteilt. Während Riffel und lange Wellen vorrangig durch den Fahrbetrieb entstehen, ist die Entstehung von Rauhigkeiten oftmals auch auf einen stattgefundenen Schienenschleifprozess zurückzuführen.

Zur Beseitigung von Unebenheiten auf Schienen werden vorrangig spanabhebenden Verfahren, wie Schleifen, Fräsen und Hobeln verwendet.

Zur Vermessung von Fahrflächenunebenheiten sind verschiedene Messverfahren entwickelt worden.

Bekannt Ist ein Gleismessgerät zur Messung der Form und der relativen Lage zweier Schienen, welches von einem auf dem Gleis fahrenden Fahrzeug aus fortlaufend den Abstand zur Schienenoberfläche berührungslos nach dem Prinzip der optischen Triangulation misst (DE 26 18 365 A1). Ein ähnliches Verfahren auf der Basis der optischen Triangulation wird in DE 195 35 259 A1 beschrieben.

Weiterhin ist ein Verfahren zur berührungslosen, optisch-elektronischen Messung von Unebenheiten in der Oberfläche eines Objektes von einer Messplattform aus bekannt, wobei Messplattform und Objekt relativ zueinander bewegt werden und eine Vielzahl von aufeinanderfolgenden Momentaufnahmen bilden (DE 197 21 915 C1).

Aus der DE 42 37 713 A1 ist ein Verfahren bekannt, welches zur Messung der wellenförmigen Unebenheiten, insbesondere von Schienenriffeln eingesetzt wird. Dabei weist ein auf der Schiene fahrender Messwagen einen Abstandsdetektor zur berührungslosen Messung des Abstandes von der Schiene auf. Als Abstandssensor wird vorzugsweise ein Laserdistanzmesser eingesetzt, der mittels eines auf die Schiene gerichteten und dort reflektierten Laserstriches den Abstand zur Fahroberfläche der Schiene exakt vermisst.

Mittels Ultraschallprüftechnik in Schienenprüfzügen werden Trennungen im Schieneninneren detektiert.

Letztendlich ist ein Verfahren und eine Vorrichtung zur Detektion und Bewertung von Oberflächenschäden an verlegten Schienen und Weichenteilen bekannt, bei dem man die Schienen und Weichenteile mit mindestens einer Wirbelstrom-Prüfsonde abfährt und das Messsignal der Sonde(n) ortabhängig aufzeichnet (DE 100 25 066 A1).

Alle bekannten Verfahren sind nicht in der Lage von einem Messzug aus Rauhigkeiten an frisch geschliffenen Schienen und/oder Schienenbereichen streckenunabhängig und ortsgenau zu vermessen und zu bewerten.

Darüber hinaus ist es sehr aufwendig, nach dem Schleifprozess die Rauheit der Schiene mittels mechanischer Abtastung über eine unbegrenzte Länge zu ermitteln.

Aus der US 5 537 334 ist es bekannt, dass mit einer Wirbelstrom-Prüfsonde aufgenommene Rauschsignale vom Messsignal getrennt werden, das Rauschsignal wird aber nicht zur Messung einer Materialgröße oder einer Oberflächeneigenschaft des zu untersuchenden Materials herangezogen.

Der Erfindung liegt die Aufgabe zugrunde ein Messverfahren zu entwickeln, welches die Nachteile des Standes der Technik nicht aufweist und das unmittelbar nach dem Schleifen von Schienenoberflächen unerwünschte und unzulässige Rauheitswerte der Schienenoberfläche erkennt, auswertet und eine Nachbehandlung signalisiert.

Die Rauheit ($R_y$) von Schienen wird erfindungsgemäß dadurch bestimmt, dass mit Hilfe der wegabhängig aufgezeichneten Messsignale der Wirbelstromsonden aus der Amplitudenhöhe des Signalrauschens die periodisch auftretenden Maxima ($H_R$) ermittelt werden und mit Hilfe einer Kalibrierkurve in eine entsprechende Rauheit nach der Funktion

$$R_Y = k * \ln(H_R) \qquad (k - \text{experimentell ermittelter Materialkennwert})$$

örtlich exakt zuordenbar umgerechnet wird.

Der Materialkennwert wird anhand von Wirbelstrommessungen ermittelt, die an Schienen mit unterschiedlichen Rauheiten durchgeführt werden. Für jede Schienengüte werden verschiedene Rauheiten untersucht. Auf diese Weise erhält man für jede Schienengüte eine eigene Kalibrierkurve mit dem entsprechenden Materialkennwert für die Bewertung der Oberflächenrauheit.

Für das erfindungsgemäße Verfahren werden vorrangig hochauflösende Wirbelstromsonden (Signalauflösung ≤ 1 mm) benutzt.

Die Messung kann in 2 oder mehreren Spuren erfolgen, so dass somit eine flächige Darstellung des Messergebnisses entstehen.

Die ermittelten Rauheitswerte werden in Bereiche eingeteilt, die in der flächigen Darstellung erscheinen, wodurch ein C-Bild der geschliffenen Schienenoberfläche entsteht.

Nach dem Überfahren der zu prüfenden Oberfläche in mehreren Spuren mit Wirbelstromsonden, wird ein C-Bild durch ein Nebeneinanderlegen der einzelnen Spursignale und einem Zuordnen der Amplituden der Wirbelstromsignale zu den Graustufen hergestellt, wodurch mit Hilfe der Graustufen an jedem Punkt des Bildes sofort die Rauheit und deren Verteilung auf der Oberfläche festgestellt wird.

Die Messung der Rauheit, insbesondere periodisch auftretender Rauheitswerte wird unabhängig von der Schienenlänge durchgeführt.

Zur Messung werden mindestens zwei Wirbelstrom-Sonden gleichzeitig verwendet, wobei die Wirbelstrom-Sonden in fest eingestellten Spuren die Schienenoberfläche prüfen.

Die Wirbelstrom-Sonden werden in Schritten, vorzugsweise in 5°-Schritten über das Schienenquerprofil geschwenkt, so dass damit verschiedene Spuren auf der Schienenoberfläche vermessen werden.

Die gewonnenen Messergebnisse werden online ausgewertet und zum sofortigen Eingriff in einen parallel laufenden Schleifprozess verwendet.

**Vorteile der Erfindung:**

- die Vermessung der Schienenoberfläche erfolgt nach einem gerade durchgeführten Schleifen mit aktuellem Ortsbezug und sehr zeitnah, so dass vor Ort und sofort beim Schleifen eine geeignete Maßnahme getroffen werden kann
- es kann eine längen-/streckenunabhängige und nahezu unendliche Vermessung der Oberfläche von Schienensträngen erfolgen
- die Messung ist geschwindigkeitsunabhängig
- auf der zu prüfenden Schiene können wahlweise verschiedene Messspuren eingestellt werden
- es können verschiedene Spuren gleichzeitig vermessen werden
- die Messung kann parallel zur Schleifung erfolgen, somit ist der jeweilige Schleifgang steuerbar
- die Messergebnisse ergeben eine flächige Darstellung der Verteilung der Rauheit

**Ausführungsbeispiel**

Die Erfindung soll anhand eines Ausführungsbeispiels näher erläutert werden.

Dabei zeigen die Figuren:

Fig. 1:   Messergebnis mit Bewertungsschwellen (schematisch)
Fig. 2:   Prinzipdarstellung einer Kalibrierkurve

Die Rauheitsmessung an geschliffenen Schienen mittels Wirbeistromtechnologie kommt unter anderem in Schienenschleifzügen zur Anwendung, um vor Ort einen Qualitätsnachweis über die beendete Schleifung vornehmen zu können. Parallel ist es möglich, ein manuelles Wirbelstromsystem zu betreiben, das flexibel eingesetzt werden kann. Die Wirbelstromprüfung wird während des Schleifeinsatzes durchgeführt. Dabei ist es wichtig, dass die Prüfung in mehreren Spuren auf der geschliffenen Schiene durchgeführt wird, weil dadurch bereits während des Schleifens Aussagen über den Schienenoberflächenzustand getroffen und gezielt in den noch laufenden Schleifprozess eingegriffen werden kann, um das gewünschte Ergebnis zu erreichen.

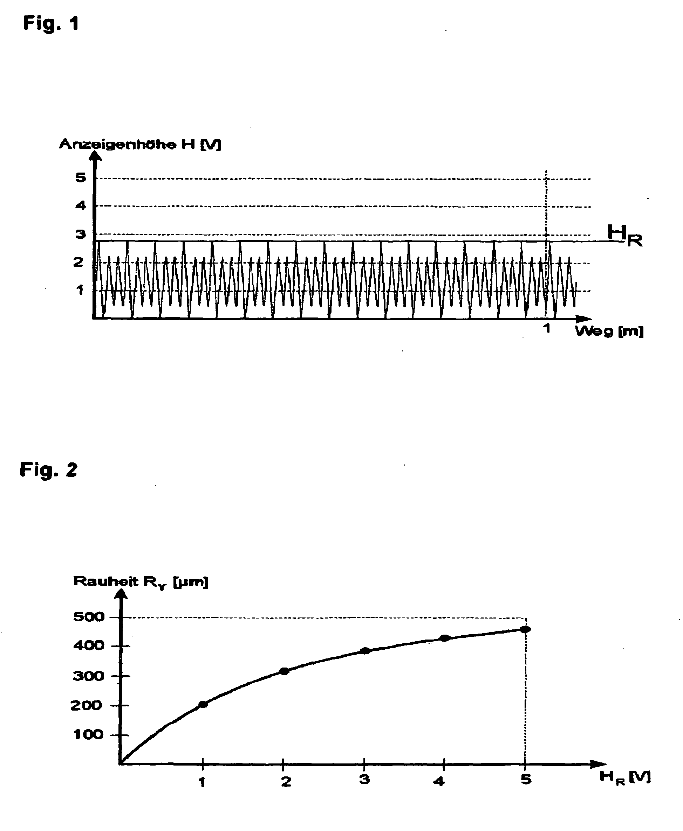

Die Daten werden mittels einer Kalibrierkurve (Fig. 2) ausgewertet und stehen sofort nach dem Schleifprozess zur Verfügung. Mittels eines integrierten GPS-Systems können die Prüfergebnisse exakt dem Standort zugeordnet werden.

Außerdem kann mit der o. g. parallelen Prüftechnik eine Überwachung der Schienenoberfläche nach einer vollzogenen Schienenschleifung stattfinden, um die Herstellung eines homogenen Fahrspiegels und damit einer geringen Oberflächenrauhigkeit festzustellen.

Bei der Auswertung der Messsignale kann sowohl eine mittlere Rauhigkeit, als auch die Bewertung der Maxima, d. h.

der einzelnen Rissspitzen erfolgen. Die Auswertesoftware gestattet die manuelle Festlegung von Schwellen, deren Überschreitung die Bestimmung der Amplituden erlaubt.

Aus periodisch auftretenden Rauheitswerten lässt sich mittels der erfindungsgemäßen Lösung auf den Oberflächenzustand der Schiene nach dem Schleifen schließen. Es sind Rauheiten ab ca. 40 μm nachweisbar.

Figur 1 zeigt einen Abschnitt mit einer Länge von 1 Meter mit periodisch auftretenden Signalmaxima, die ihre Ursache in periodisch auftretenden tieferen Schleifriefen haben. Die Höhe der Maxima ist ein Maß für die Rauheit der Schiene und lässt sich mit Hilfe der Kalibrierkurve (Figur 2) ermitteln.

Einen Vermeidung periodischer Schleifriefen bewirkt eine höhere Qualität der geschliffenen Schienenoberfläche. Hohe Rauheitswerte bewirken hohe Laufgeräusche während des Betriebes. Genau dies soll durch die erfindungsgemäße Lösung vermieden werden.

Vorrangig kommen zwei Wirbelstromsonden zur Anwendung. Dabei handelt es sich um eine Sonde, die hohe Eindringtiefen erreicht und zur Bewertung der Schleifriefen hinsichtlich der Rauheit herangezogen wird und eine weitere Sonde, die eine sehr hohe Ortsauflösung besitzt. Dies ist wichtig für die Anzeige und Bewertung der Schleifriefen, da mit Hilfe der hochauflösenden Sonde festgestellt werden kann, ob es durch den geringen Abstand der Schielfriefen zueinander zu Signalüberlagerungen uns damit zu einer Verfälschung der Bewertung der Messergebnisse kommt.

**Patentansprüche**

1. Verfahren zur Ermittlung der Rauheit von frisch geschliffenen Schienen und /oder Schienenbereichen, wobei in einer fahrbaren Vorrichtung befindliche Wirbelstrom-Prüfsonden über Bereiche von Schienensegmenten geführt und die Messsignale ortabhängig ausgewertet werden, *gekennzeichnet dadurch, dass* mit Hilfe der wegabhängig aufgezeichneten Meßsignale der Wirbelstromsonden aus der Amplitudenhöhe des Signalrauschen die Höbe der periodisch auftretenden Maxima ($H_R$) ermittelt wird, und mit Hilfe einer Kalibrierkurve in eine entsprechende Rauheit $R_{(y)}$ nach der Funktion $R_y = f(H_R)$ örtlich exakt zuordnenbar umgerechnet wird.

2. Verfahren nach Anspruch 1. *gekennzeichnet dadurch, dass* vorrangig hochauflösende Wirbelstromsonden (Signalauflösung ≤ 1 mm) benutzt werden.

3. Verfahren nach Ansprüchen 1 und 2, *gekennzeichnet dadurch, dass* die Messung in 2 oder mehreren Spuren erfolgen kann und somit eine flächige Darstellung des Messergebnisses entsteht.

4. Verfahren nach Anspruch 1 bis 3, *gekennzeichnet dadurch, dass* die ermittelten Rauheitswerte in Bereiche eingeteilt werden und diese Bereiche in der flächigen Darstellung erscheinen, wodurch ein C-Bild der geschliffenen Schienenoberfläche entsteht.

5. Verfahren nach Anspruch 1 bis 4, *gekennzeichnet dadurch, dass* nach dem Überfahren der zu prüfenden Oberfläche in mehreren Spuren mit Wirbelstromsonden, ein C-Bild durch ein Nebeneinanderlegen der einzelnen Spursignale und einem Zuordnen der Amplituden der Wirbelstromsignale zu den Graustufen hergestellt wird, wodurch mit Hilfe der Graustufen an jedem Punkt des Bildes sofort die Rauheit und deren Verteilung auf der Oberfläche festgestellt wird.

6. Verfahren nach Anspruch 1 bis 5, *gekennzeichnet dadurch, dass* die Messung der Rauheit, insbesondere periodisch auftretender Rauheitswerte unabhängig von der Schienenlänge durchgeführt wird.

7. Verfahren nach Anspruch 1 bis 6, *gekennzeichnet dadurch, dass* zur Messung mindestens zwei Wirbelstrom-Sonden gleichzeitig verwendet werden.

8. Verfahren nach Anspruch 7, *gekennzeichnet dadurch, dass* die Wirbelstrom-Sonden in fest eingestellten Spuren prüfen.

9. Verfahren nach Anspruch 7 und 8, *gekennzeichnet dadurch, dass* die Wirbeistrom-Sonden in Schritten, vorzugsweise in 5°-Schritten über das Schienenquerprofil geschwenkt und damit verschiedene Spuren vermessen werden.

10. Verfahren nach Anspruch 7 bis 9, *gekennzeichnet dadurch, dass* die gewonnenen Messergebnisse online ausgewertet und zum sofortigen Eingriff in einen parallel laufenden Schleifprozess verwendet werden.

## Claims

1. A method for determining the roughness of freshly ground rails and/or rail regions, wherein eddy current inspection probes arranged in a mobile device are guided over regions of rail segments and the measuring signals are evaluated as a function of the respective position,
   **characterized in that** the intensity of the periodically occurring maximums ($H_R$) is determined from the amplitude of the signal noise with the aid of the measuring signals that are recorded as a function of the position, and **in that** these maximums are converted into a corresponding roughness $R_{(y)}$ with the aid of a calibration curve such that they can be exactly allocated to the respective position, namely in accordance with the function $R_y = f(H_R)$.

2. The method according to claim 1, **characterized in that** high-resolution eddy current probes (signal resolution $\leq 1$ mm) are preferably used.

3. The method according to claims 1 and 2, **characterized in that** the measurement is carried out in 2 or more tracks such that the measuring results can be illustrated two-dimensionally.

4. The method according to claim 1 to 3, **characterized in that** the determined roughness values are divided into ranges and these ranges appear in the two-dimensional illustration such that a C-image of the ground rail surface is produced.

5. The method according to claim 1 to 4, **characterized in that** a C-image is produced after guiding eddy current probes over the surface to be inspected in several tracks by arranging the individual track signals next to one another and allocating the amplitudes of the eddy current signals to the gray scales, namely such that the roughness and its distribution on the surface can be determined at any point of the image with the aid of the gray scales.

6. The method according to claim 1 to 5, **characterized in that** the measurement of the roughness, particularly of periodically occurring roughness values, is carried out independently of the rail length.

7. The method according to claim 1 to 6, **characterized in that** at least two eddy current probes are used simultaneously for the measurement.

8. The method according to claim 7, **characterized in that** the eddy current probes carry out the inspection in tracks that are adjusted in a fixed fashion.

9. The method according to claim 7 and 8, **characterized in that** the eddy current probes are pivoted over the transverse rail profile in increments, preferably in 5° increments, such that different tracks are measured.

10. The method according to claim 7 to 9, **characterized in that** the obtained measuring results are evaluated on-line and used for immediately adapting a parallel grinding process accordingly.

## Revendications

1. Procédé de détermination de la rugosité de rails et/ou parties de rails venant d'être meulés, dans lequel des sondes de contrôle à courant de Foucault se trouvant dans un dispositif déplaçable sont guidées sur des zones de segments de rails et les signaux de mesure sont exploités en fonction de l'emplacement,
   **caractérisé en ce qu'**à l'aide des signaux de mesure enregistrés en fonction du trajet des sondes à courant de Foucault, à partir du niveau d'amplitude des bruits de signaux, le niveau des maxima apparaissant périodiquement ($H_R$) est déterminé et converti à l'aide d'une courbe de calibrage en une rugosité correspondante $(R)_y$ de manière exactement associable localement suivant la fonction $R_y = f(H_R)$.

2. Procédé selon la revendication 1, **caractérisé en ce qu'**on utilise surtout des sondes à courant de Foucault à haute définition (définition de signal $\leq 1$ mm).

3. Procédé selon les revendications 1 et 2, **caractérisé en ce que** la mesure peut avoir lieu dans 2 pistes ou plus et qu'on obtient ainsi une représentation surfacique du résultat de mesure.

4. Procédé selon les revendications 1 à 3, **caractérisé en ce que** les valeurs de rugosité déterminées sont divisées en plages et que ces plages apparaissent dans la représentation surfacique, ce qui donne une image C de la surface meulée du rail.

5. Procédé selon les revendications 1 à 4, **caractérisé en ce qu'**après avoir passé sur la surface à contrôler des sondes à courant de Foucault dans plusieurs pistes, on établit une image C en juxtaposant les signaux de pistes isolés et en associant les amplitudes des signaux à courant de Foucault aux échelles de gris, ce qui, à l'aide des échelles de gris, permet de détecter immédiatement à chaque point de l'image la rugosité et sa répartition sur la surface.

6. Procédé selon les revendications 1 à 5, **caractérisé en ce que** la mesure de la rugosité, notamment des valeurs de rugosité apparaissant périodiquement, est effectuée indépendamment de la longueur du rail.

7. Procédé selon les revendications 1 à 6, **caractérisé en ce qu'**on utilise simultanément pour la mesure au moins deux sondes à courant de Foucault.

8. Procédé selon la revendication 7, **caractérisé en ce que** les sondes à courant de Foucault procèdent au contrôle dans des pistes définies fixement.

9. Procédé selon les revendications 7 et 8, **caractérisé en ce qu'**on fait pivoter les sondes à courant de Foucault par étapes, de préférence par étapes de 5°, sur le profil transversal du rail et qu'on mesure ainsi différentes pistes.

10. Procédé selon les revendications 7 et 9, **caractérisé en ce que** les résultats de mesure obtenus sont exploités en ligne et sont utilisés pour intervenir immédiatement dans un processus de meulage se déroulant en parallèle.

**Fig. 1**

**Fig. 2**